Europäisches Patentamt

European Patent Office

Office européen des brevets

(19)

(11)  **EP 1 340 013 B1**

(12)  **FASCICULE DE BREVET EUROPEEN**

(45)  Date de publication et mention
de la délivrance du brevet:
**15.09.2004   Bulletin 2004/38**

(21)  Numéro de dépôt: **01997656.2**

(22)  Date de dépôt: **12.11.2001**

(51)  Int Cl.⁷: **F16L 11/08**, F16L 11/16

(86)  Numéro de dépôt international:
**PCT/FR2001/003525**

(87)  Numéro de publication internationale:
**WO 2002/042673 (30.05.2002 Gazette 2002/22)**

(54)  **CONDUITE TUBULAIRE FLEXIBLE**

FLEXIBLE RÖHRENFÖRMIGE LEITUNG

FLEXIBLE TUBULAR PIPE

(84)  Etats contractants désignés:
**AT BE CH CY DE DK ES FI FR GB GR IE IT LI LU
MC NL PT SE TR**

(30)  Priorité:  **24.11.2000  FR 0015203
25.01.2001  FR 0101010**

(43)  Date de publication de la demande:
**03.09.2003   Bulletin 2003/36**

(73)  Titulaires:
•  **TECHNIP FRANCE
92400 Courbevoie (FR)**
•  **Institut Français du Pétrole
92500 Rueil Malmaison (FR)**

(72)  Inventeurs:
•  **ESPINASSE, Philippe
F-76420 Bihorel (FR)**

•  **JUNG, Patrice, Joel, Louis
F-76940 La Mailleraye sur Seine (FR)**
•  **AVERBUCH, Daniel
F-92500 Rueil-Malmaison (FR)**
•  **DUPOIRON, François
F-76360 Barentin (FR)**

(74)  Mandataire: **Bertrand, Didier et al
Cabinet FEDIT-LORIOT
38, Avenue Hoche
75008 Paris (FR)**

(56)  Documents cités:
FR-A- 2 665 237            FR-A- 2 784 445
GB-A- 1 081 339            US-A- 4 368 088

EP 1 340 013 B1

## Description

La présente invention concerne une conduite tubulaire flexible, utilisable de préférence en mer profonde, pour des profondeurs comprises entre 1000 et 3000 m bien qu'elle puisse également être utilisée pour des profondeurs inférieures à 1000 m. De telles conduites tubulaires flexibles sont utilisées dans des installations de production pétrolière sous-marine, pour le transport de fluides tels que des hydrocarbures.

Plusieurs types de conduites tubulaires flexibles sont actuellement utilisées et elles sont décrites dans l'API 17 J (AMERICAN PETROLEUM INSTITUTE). Dans certaines conduites flexibles, il y a une voûte de pression qui est constituée par un enroulement hélicoïdal à pas court d'un fil de forme qui peut être auto-agrafable ou agrafable à l'aide d'une agrafe. De même, les carcasses métalliques utilisées dans les conduites flexibles dites "Rough bore" sont réalisées à partir d'une bande métallique profilée à double agrafage et résistant à l'écrasement.

Dans tous les cas, on a cherché à améliorer le rapport inertie/poids des fils de forme ou feuillard agrafé utilisés pour réaliser les différentes couches métalliques des conduites flexibles.

Pour des applications en mer profonde et dans le cas des voûtes de pression, les fils de renfort doivent présenter une inertie importante pour résister à la pression externe et un poids faible pour réduire le poids total de la conduite flexible afin d'améliorer les performances des moyens de pose et permettre l'auto-supportage de la conduite flexible.

Plusieurs solutions ont été proposées.

Une première solution a consisté à utiliser un fil de forme dont la section est en I, comme cela est décrit dans FR-A-2 782 142. Un tel fil de forme présente un rapport inertie/poids acceptable mais le prix de fabrication est très élevé en raison du fait qu'il est obtenu par tréfilage ou laminage.

Une autre solution est décrite dans FR 2 654 795. La carcasse interne est réalisée à partir de bandes métalliques à double agrafage, en effectuant une déformation plastique d'un ruban métallique plat tel qu'un feuillard en acier inoxydable, pour lui conférer la forme d'une bande profilée à double agrafage, puis en effectuant un spiralage de la bande profilée, c'est-à-dire en l'enroulant hélicoïdalement à faible pas avec emboîtement des bandes métalliques profilées. Après emboîtement des deux spires consécutives, une dernière déformation plastique de la bande est effectuée pour compléter l'agrafage.

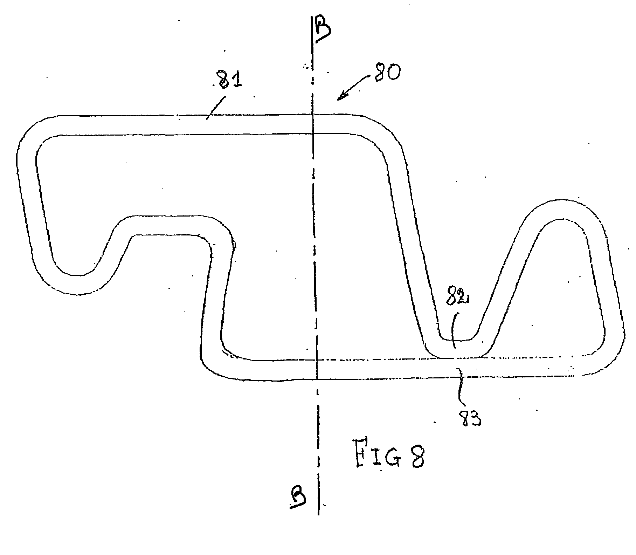

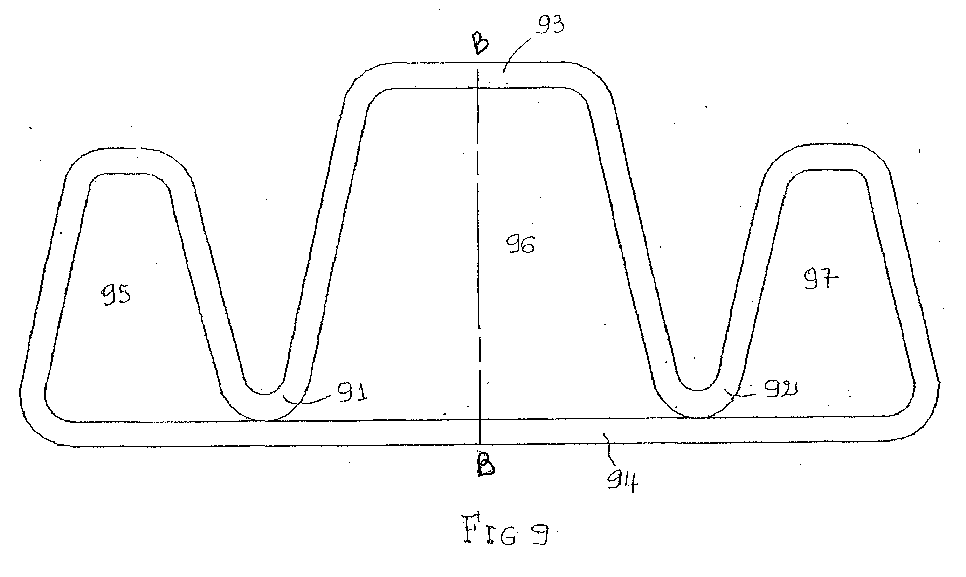

Dans le brevet FR 2 665 237, il est préconisé de réaliser une carcasse tubulaire métallique comportant au moins un caisson enroulé en hélice avec un faible pas, ladite carcasse métallique étant obtenue au moyen de deux bandes profilées complémentaires enroulées hélicoïdalement avec un faible pas. De nombreux exemples de bandes profilées sont décrits et représentés dans ce document, certains d'entre eux, comme par exemple ceux des figures 8 et 9, étant constitués par une bande en forme de S allongé et comportant un caisson à une première extrémité et un bord d'accrochage incurvé vers le haut à l'autre extrémité, le bord d'accrochage pénétrant dans une cuvette formée par le caisson et la barre transversale du S de la spire précédente. Le bord d'accrochage incurvé peut reposer sur le fond de la cuvette (figure 9) ou ne pas être en contact avec ledit fond (figure 8).

Il est à noter que toutes les sections des caissons ménagés à l'une et/ou à l'autre des extrémités de chaque bande profilée sont des sections carrées ou rectangulaires.

Bien que de telles bandes profilées à caisson aient donné satisfaction, il a été constaté certains inconvénients. Si on considère qu'un caisson est formé par des parties d'une même spire de la bande profilée et comporte une paroi supérieure, une paroi inférieure et des parois latérales et lorsqu'une force extérieure est appliquée sur l'une des parois supérieure et/ou inférieure, telle qu'une force de compression ou d'écrasement ou encore une force engendrée par le fluide de sous-pression, il se produit alors un flambage des parois ou faces latérales et/ou des parois supérieure ou inférieure du caisson, ce qui diminue au moins localement la résistance à l'écrasement de la carcasse interne.

Pour des forces ou des pressions dépassant une certaine valeur, il se produit un flambage des parois latérales du caisson.

Pour des forces ou des pressions plus faibles et lorsque les parois latérales ne sont pas rigoureusement perpendiculaires aux parois supérieure et inférieure du caisson, il peut se produire un écrasement dudit caisson entraînant un écartement ou un rapprochement des parois latérales (ouverture ou fermeture du caisson). Pour éviter ces phénomènes d'ouverture ou de fermeture, il a été préconisé, dans certains cas, comme par exemple dans FR 2 665 237 de souder une extrémité du caisson en un point de la bande. Mais une telle solution enchérit le coût de fabrication et elle est difficile à mettre en oeuvre.

Dans un mode de réalisation antérieur, le feuillard caisson affecte la forme d'une lunette. Ce profil est réalisé à partir d'un feuillard dont les bords libres sont soudés sur ce même profil de manière à conférer au profil une bonne stabilité pour la pose. Toutefois, l'opération de soudage est difficile à mettre en oeuvre et augmente considérablement le coût de fabrication.

Dans un autre mode de réalisation antérieur, le profil lunette est similaire mais réalisé à partir de deux tubes, de section carrée, lesdits tubes étant reliés par un feuillard qui est soudé sur ces tubes. Les opérations de soudage renchérissent également et de manière considérable le coût de fabrication.

De plus, ces diverses formes du profil ne permettent pas de limiter le fluage d'une gaine d'étanchéité adjacente, ce qu'on cherche à éviter dans la mesure du possible dans le cas de la voûte de pression principalement. Il faut également noter qu'aucune indication n'est donnée quant au rapport largeur/épaisseur du feuillard alors que cela est devenu important pour assurer la stabilité du profil lors de la pose, afin d'éviter l'effet de flambage.

En effet, si le profil a une largeur trop importante par rapport à son épaisseur, les parois latérales du caisson flamberont lors du spiralage ou enroulement à pas court.

Dans la demande de brevet 0005175 du 21 avril 2000, les profils qui sont décrits donnent de bons résultats mais présentent parfois des inconvénients notamment en raison de la forte dissymétrie du profil.

La présente invention a pour but de proposer un profil qui permet de simplifier les opérations de spiralage tout en ayant un rapport inertie/pas important, proche de celui obtenu avec des fils de forme traditionnels de hauteur équivalente, et un rapport inertie/poids important, nécessaire pour les grandes profondeurs notamment.

La présente invention a pour objet une conduite tubulaire flexible selon la revendication 1.

L'invention peut être mise en oeuvre pour réaliser une voûte de pression ou une carcasse avec un tube de section quelconque agrafé.

Un avantage de la présente invention réside dans le fait qu'on utilise un tube peu coûteux qu'on profile par exemple à l'aide d'un train de galets ou d'une filière à la forme souhaitée. De cette manière, il est possible d'optimiser l'inertie du profil et donc d'améliorer le rapport intertie/poids et de lui conférer une forme adaptée pour que l'agrafage des spires d'enroulement soit réalisé simplement et sans difficulté.

Un autre avantage de la présente invention est qu'il n'est plus nécessaire de prévoir un système de maintien du caisson qui est réalisé dans l'art antérieur par une mise en butée ou par soudage ce qui simplifie la fabrication par exemple de la voûte de pression réalisée à l'aide du tube selon l'invention, de sorte que le coût de fabrication est considérablement réduit.

Un autre avantage est que le rapport inertie/pas d'enroulement est optimisé, le tube profilé agrafé pouvant limiter l'influence du jeu nécessaire entre les spires pour conférer une certaine flexibilité à la conduite.

Un autre avantage réside dans le fait que le tube profilé creux est sensiblement symétrique et en ce que les zones en compression compensent les zones en tension. De ce fait, l'enroulement ou spiralage est plus facile à mettre en oeuvre.

D'autres avantages et caractéristiques apparaîtront à la lecture de la description de plusieurs modes de réalisation de l'invention, ainsi que des dessins annexés sur lesquels :

- la figure 1 est une vue en coupe schématique d'une voûte de pression réalisée par l'enroulement hélicoïdal d'au moins un tube profilé creux suivant un premier mode de réalisation de l'invention ;
- la figure 2 est une vue en coupe schématique d'une voûte de pression réalisée par l'enroulement hélicoïdal d'au moins un tube profilé creux selon un deuxième mode de réalisation de l'invention ;
- la figure 3 est une vue en coupe schématique d'une voûte de pression réalisée par l'enroulement hélicoïdal d'au moins un tube profilé creux selon un troisième mode de réalisation de l'invention ;
- la figure 4 est une vue en coupe schématique d'une voûte de pression réalisée par l'enroulement hélicoïdal d'au moins un tube profilé creux selon un quatrième mode de réalisation de l'invention ;
- la figure 5 est une vue en coupe schématique d'une voûte de pression réalisée par l'enroulement hélicoïdal d'au moins un tube profilé creux selon un cinquième mode de réalisation de l'invention ;
- la figure 6 est une vue en coupe schématique d'une voûte de pression réalisée par l'enroulement hélicoïdal d'au moins un tube profilé creux selon un sixième mode de réalisation de l'invention ;
- les figures 7, 8, 9 et 11 sont des vues en coupe schématique d'un tube profilé creux selon des modes différents de réalisation de l'invention ;
- les figures 10 et 12 sont des vues en coupe schématique d'une voûte de pression réalisée par l'enroulement hélicoïdal d'au moins un tube profilé creux selon un autre mode de réalisation.

Par le terme agrafé, on entend dans ce qui suit un profil non agrafable mais qui serait agrafé par une ou deux agrafes, ou un profil agrafable ou auto-agrafable.

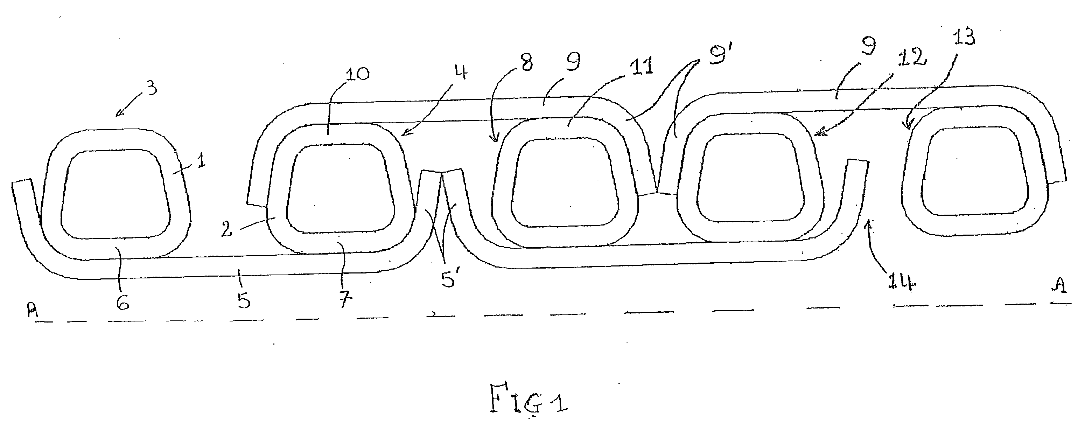

Dans les modes de réalisation représentés sur les figures 1 à 5, les tubes profilés creux ne sont pas agrafables et nécessitent donc une ou deux agrafes de section appropriée pour assurer la liaison entre deux spires consécutives d'un même enroulement lorsqu'un seul tube profilé creux est utilisé ou de deux enroulements lorsque deux tubes profilés creux sont utilisés. De tels tubes profilés non agrafables peuvent être comparés à des frettes bien connues des spécialistes et décrites dans l'API 17 J.

Les tubes profilés creux 1 et 2 peuvent présenter chacun une section trapézoïdale comme cela est représenté sur la figure 1, la section trapézoïdale étant obtenue par exemple à partir d'un tube de section circulaire qui a été déformé par un train de galets ou dans une filière. Chaque tube est enroulé hélicoïdalement autour de l'axe longitudinal A-A de la conduite flexible qui n'est pas représentée mais qui est décrite suivant les divers types dans l'API 17 J. Pour la réalisation d'une voûte de pression, les deux tubes 1 et 2 sont enroulés ou spiralés avec un pas court. Les deux tubes 1 et 2 des deux spires consécutives 3 et 4 sont réunis ou agrafés au moyen d'une première agrafe 5 qui enveloppe les faces inférieures 6 et 7 des tubes 1 et 2. L'agrafe 5 présente une forme sensiblement en U. Les spires consécutives 4 et 8 sont agrafées au moyen d'une agrafe 9, similaire à l'agrafe 5, mais enveloppant les faces supérieures 10 et 11 des tubes constituant les spires suivantes. La spire 12 est agrafée à la spire précédente 8 par une agrafe inférieure 5 tandis que la spire 12 et la spire suivante 13 sont agrafées à l'aide d'une agrafe supérieure 9.

De préférence, les agrafes inférieure 5 et supérieure 9 présentent des branches 5' et 9' qui s'enfoncent suffisamment dans les interstices ou déjoints 14 entre les spires, de sorte qu'un bon agrafage soit réalisé.

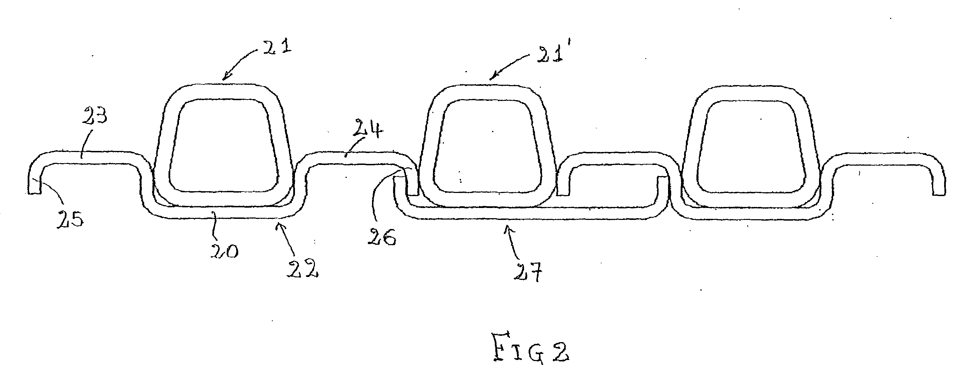

Dans le mode de réalisation représenté sur la figure 2, les tubes profilés creux 21 et 21' sont similaires à ceux représentés sur la figure 1, mais l'agrafe entre deux spires consécutives est obtenu au moyen d'agrafes différentes.

Chaque tube profilé creux 21, 21' est logé en contact dans une partie horizontale 20 d'une agrafe 22 qui comporte deux ailes latérales ou parties horizontales 23, 24, situées à un niveau supérieur par rapport au niveau inférieur occupé par la partie 20. Les ailes 23, 24 présentent des extrémités 25, 26 recourbées vers le bas pour permettre l'agrafage avec une autre agrafe 27 en forme de U. La spire 21' est en appui sur l'agrafe 27 et maintenue en place par le contact sur les extrémités 26 et 25 de l'agrafe 22 qu'on peut considérer comme affectant la forme d'un double S.

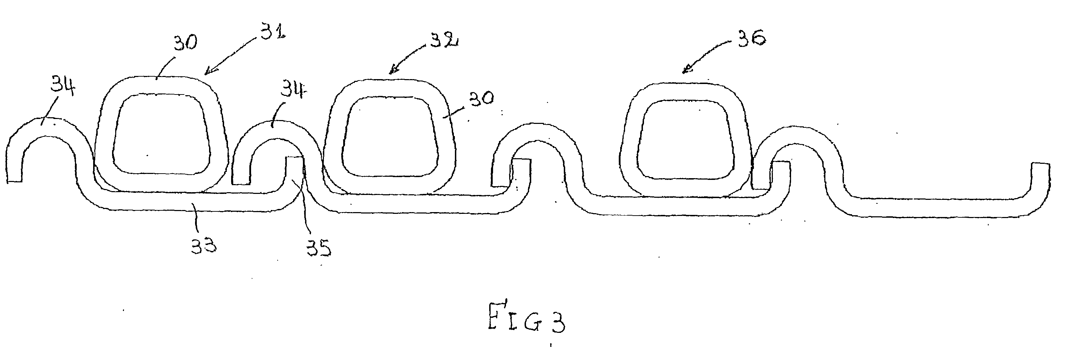

Dans le mode de réalisation représenté sur la figure 3, les tubes profilés creux 30 présentent une section trapézoïdale et deux spires consécutives 31 et 32 sont agrafées au moyen d'agrafes 33 qui présentent chacune une extrémité 34 relevée puis recourbée vers le bas et l'autre extrémité 35 simplement relevée vers le haut, de sorte que deux agrafes 33 s'agrafent par leurs extrémités. Dans la partie gauche de la figure 3, le tube profilé creux 30 est presque en appui sur les deux extrémités 34 de deux agrafes consécutives, alors que le tube 30 de la spire 32 est en appui sur l'extrémité 34 mais éloignée de l'extrémité 34 de l'autre agrafe. La voûte de pression doit présenter un certain jeu entre les spires pour conférer à la conduite une certaine flexibilité, la figure 3 représentant la voûte à pas minimum (partie gauche) et à pas maximum (partie droite) avec les spires 32 et 36 éloignées.

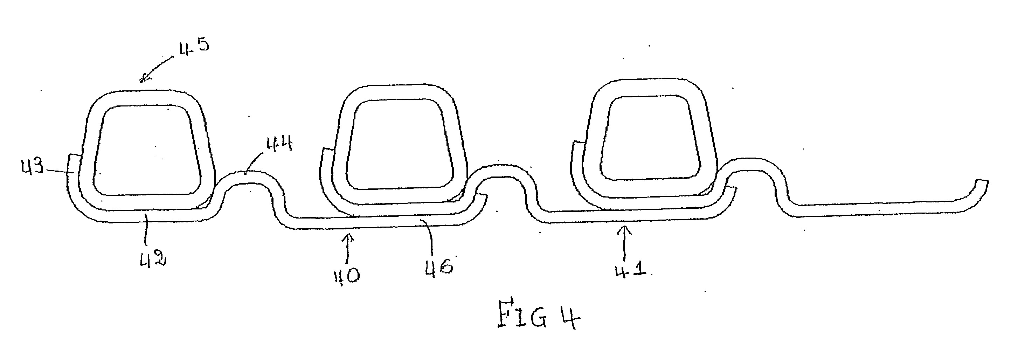

Dans le mode de réalisation de la figure 4, les agrafes 40 et 41 sont identiques et chaque agrafe 40, 41 présente une partie surélevée 42, ménagée entre une extrémité recourbée vers le haut 43 et un renflement 44 à concavité tournée vers le haut, la spire 45 étant disposée sur la partie 42 et en appui sur l'extrémité 43 et le renflement 44. La partie basse 46 de l'agrafe 40 reçoit la partie surélevée et la spire associée de l'autre agrafe consécutive 41, comme cela est représentée sur la figure.

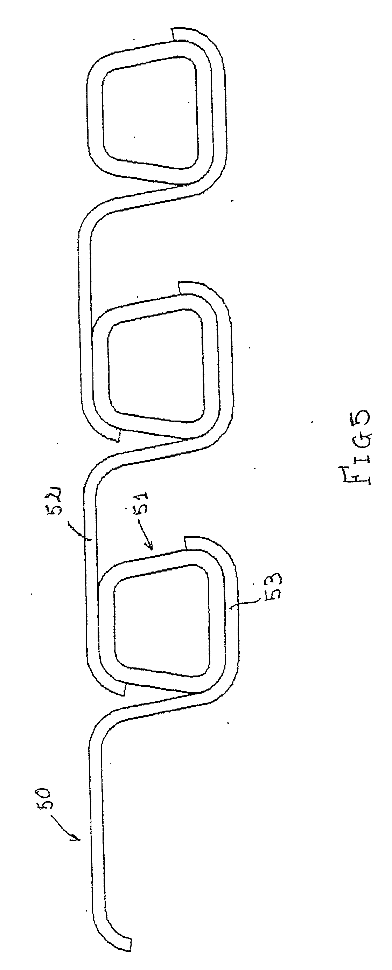

Dans le. mode de réalisation de la figure 5, les agrafes 50 affectent la forme d'un zêta, chaque spire 51 étant disposée entre les branches supérieure 52 et inférieure 53 des agrafes consécutives.

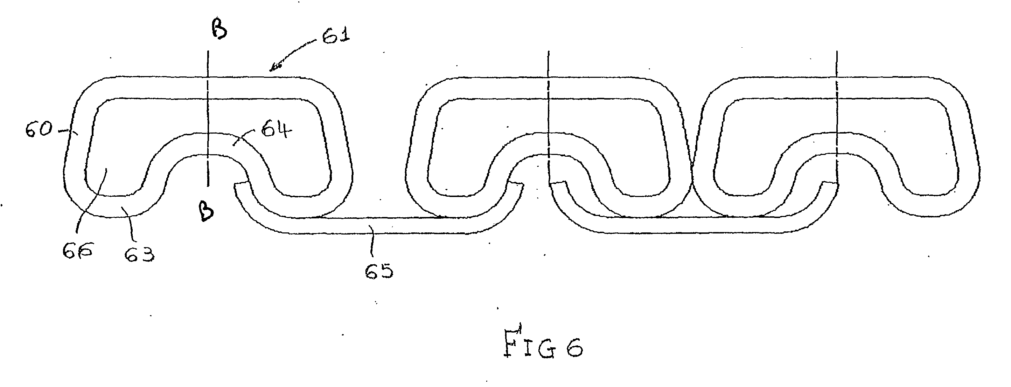

Dans les modes de réalisation des figures 6 à 11, les tubes profilés creux sont agrafables ou auto-agrafable et peuvent être comparés aux fils de forme agrafables bien connus des spécialistes tels que les fils en U, en Z ou en T.

Dans le mode de réalisation de la figure 6, chaque tube profilé creux 60 d'une spire 61 est également de forme trapézoïdale mais avec une face supérieure 62 plane et horizontale et une face inférieure 63 qui est déformée en direction de la paroi supérieure de manière à créer, d'une part, une sorte de renflement 64 pour l'agrafage au moyen d'une agrafe 65 sensiblement en forme de U et, d'autre part, de délimiter deux zones creuses 66 et 67.

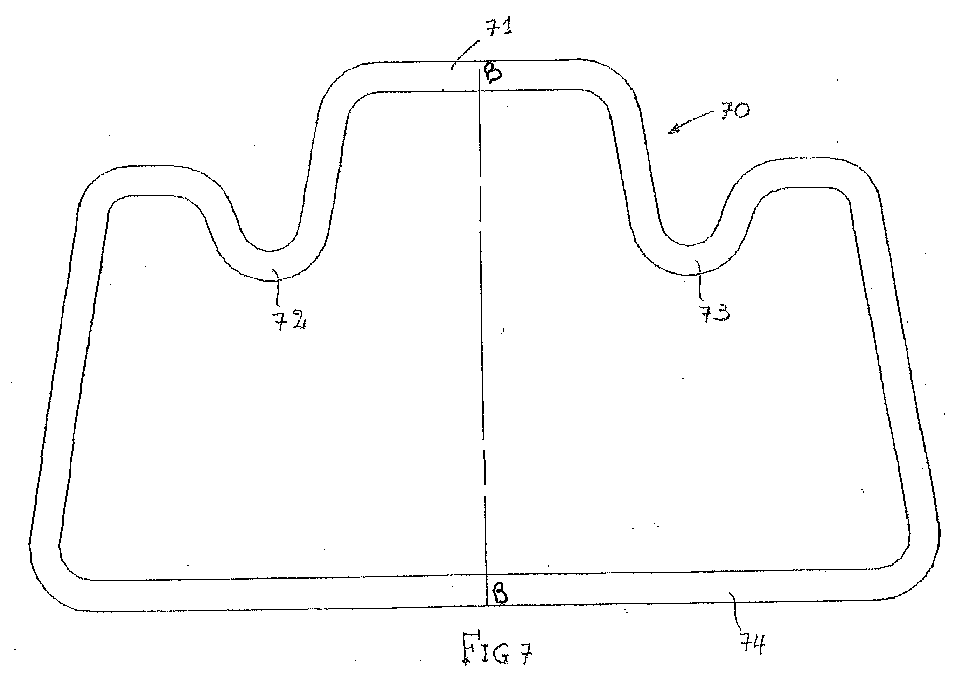

Dans le mode de réalisation de la figure 7, la forme du tube profilé creux 70 sensiblement en forme de T, présente une paroi supérieure 71 qui est déformée en deux endroits pour réaliser deux renflements 72 et 73, la paroi inférieure 74 étant horizontale.

Dans le mode de réalisation de la figure 8, la section du tube profilé creux 80 est un zêta et donc auto-agrafable avec un autre tube profilé de même section. La partie droite diffère de la partie gauche par le fait que la paroi supérieure 81 présente un renflement profond 82 qui est en contact avec la paroi inférieure 83.

Dans le mode de réalisation de la figure 9, les renflements 91 et 92 de la paroi supérieure 93 sont profonds et en contact avec la paroi inférieure 94 de manière à rigidifier le profil. De la sorte, trois caissons distincts 95 à 97 sont délimités pour améliorer la résistance à l'écrasement. Cela est également applicable au mode de réalisation des figures 6 et 8 dans lesquels le ou les renflements peuvent être profonds et amenés en contact avec la paroi opposée.

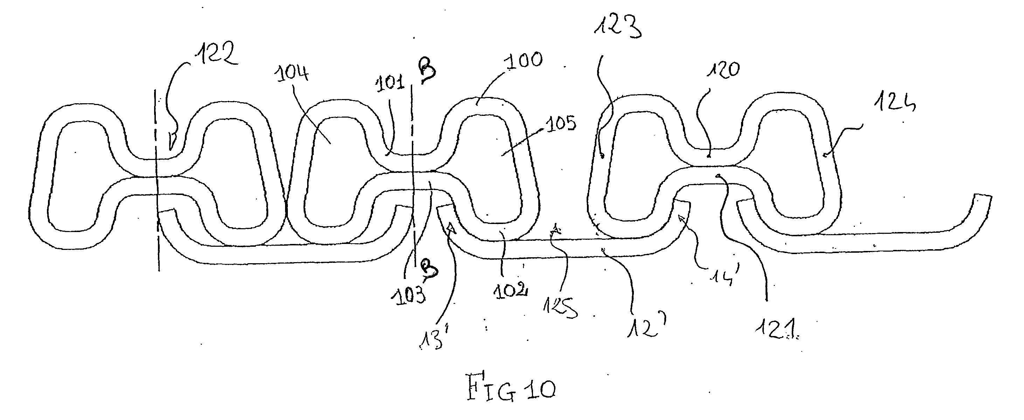

Le mode de réalisation de la figure 10 diffère de celui représenté sur la figure 6 par le fait que la face supérieure 100 est également déformée pour constituer un renflement 101 dirigé vers et en contact sur le renflement 103 de la face inférieure 102. De la sorte, on réalise une forme de "papillon" comprenant deux caissons 104 et 105 séparés l'une de l'autre. Ce profil en "papillon" présente l'avantage de ménager deux volumes plus réduits et d'augmenter en conséquence la résistance à la pression externe. De plus, la paroi supérieure de chaque caisson 104, 105 étant plus courte, le risque de flambage est diminué.

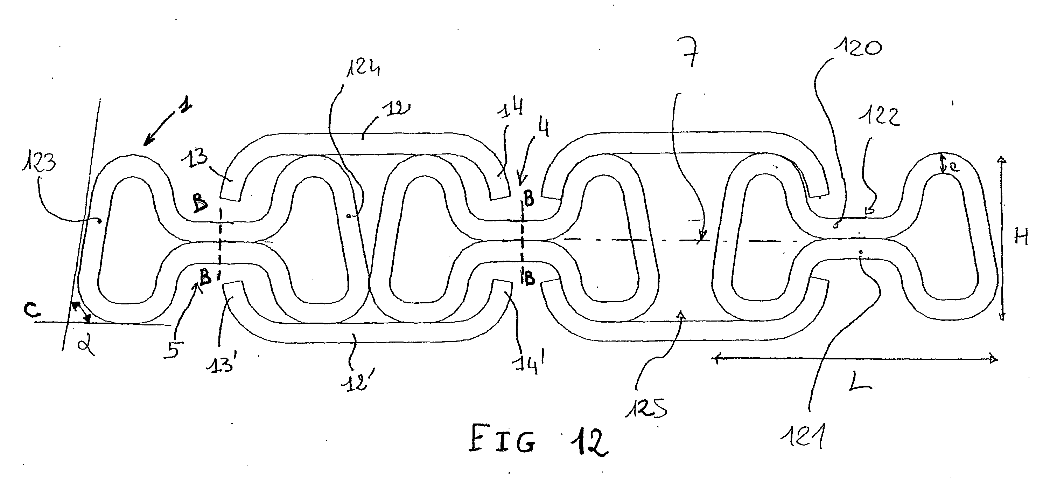

Le profilé selon l'invention et représenté sur les figures 10 et 12 est constitué par un tube métallique 1 qui est plié de manière à former les caissons distincts 104,105 qui sont symétriques par rapport à un axe de symétrie vertical B-B. Les caissons 104,105 sont séparés par un renflement supérieur 120 et un renflement inférieur 121. La portion de tube qui constitue le fond du renflement inférieur 121 est située sensiblement dans le plan de la fibre neutre 7 et elle sert d'appui au renflement supérieur 120, ladite portion constituant une zone de contact 122 pour les parois supérieure et inférieure du tube après déformation.

Chaque caisson qui est de préférence de section trapézoïdale comprend des parois latérales 123, 124 qui sont inclinées et qui font avec l'horizontale C, qui correspond à une génératrice de la conduite flexible, un angle $\alpha$ supérieur à 60° et inférieur à 90°. Comme les renflements supérieur 120 et inférieur 121 sont sur la zone de contact 122 qui est sensiblement dans le plan de la fibre neutre 7 et donc dans une zone sensiblement centrale du profilé, ladite zone sera donc soumise à peu de contraintes lors du spiralage et travaillera peu, ce qui améliore grandement la stabilité et les performances du profilé.

Pour un angle $\alpha$ proche de 90°, le profilé est plus résistant et pour un angle $\alpha$ proche de 60°, le profilé est plus stable. En conséquence, l'angle $\alpha$ optimal sera un compromis entre la résistance et la stabilité.

Le profilé décrit ci-dessus peut être utilisé pour la réalisation d'une voûte de pression ou de la carcasse métallique lorsque la conduite flexible en comporte une, par enroulement en hélice, avec un pas court, autour de l'axe horizontal A-A de la conduite flexible, chaque spire de l'enroulement étant constituée par un couple de caissons. Comme le profilé n'est pas auto-agrafable, il est possible d'agrafer les spires de plusieurs manières.

La première manière d'agrafage est représentée sur la figure 10. Dans ce mode de réalisation, les spires de l'enroulement du profilé sont agrafées par le bas, c'est-à-dire que les agrafes 12', par exemple en U inversé, ont leurs branches 13' et 14' disposées dans les renflements inférieurs consécutifs. Un autre agrafage est représenté sur la figure 12 et il consiste à utiliser les mêmes agrafes mais référencées 12 qui ont leurs branches 13 et 14 disposées dans les renflements supérieurs consécutifs. Dans ce dernier cas, on obtient un agrafage par le haut par opposition au précédent qui est appelé agrafage par le bas.

Un autre mode d'agrafage représenté également sur la figure 12 consiste à agrafer les spires par le haut et par le bas, avec des agrafes supérieures 12 dont les branches 13 et 14 sont disposées dans les renflements supérieurs, et des agrafes inférieures 12' dont les branches 13' et 14' sont disposées dans les renflements inférieurs.

Les agrafes supérieures et/ou inférieures peuvent avantageusement présenter, au niveau du déjoint 125 entre deux spires consécutives, un renflement ou bossage non représenté, ce qui permet d'augmenter localement l'inertie de l'agrafe. L'agrafe rigidifiée au niveau du bossage, est plus résistante à la pression interne du fluide circulant dans la conduite flexible. Le fluage de la gaine d'étanchéité interne, sous l'effet de la pression interne, applique une pression de contact importante sur l'agrafe. Par ailleurs, pour améliorer les caractéristiques techniques de l'agrafe, les rayons de courbure du bossage correspondent à ceux du profilé de manière à permettre la conservation des jeux fonctionnels de la voûte. Pour augmenter la résistance à l'éclatement de la voûte de pression sous l'effet de la pression interne circulant dans la conduite flexible, on peut utiliser les propriétés de l'agrafe. La résistance à la pression interne dépendant en partie de la section et des caractéristiques mécaniques du matériau utilisé, il suffit d'augmenter l'épaisseur de l'agrafe ou de choisir un matériau à hautes caractéristiques mécaniques et, de préférence, supérieures à celle du profilé ; le couple voûte-agrafe aura une résistance à l'éclatement plus importante.

Il est également possible d'utiliser des moyens pour réduire le fluage d'une gaine polymérique interne étanche qui serait en appui sur le profilé. Ces moyens peuvent comprendre seuls ou en combinaison, un jonc qui peut être disposé dans les renflements inférieurs et/ou un fil de forme qui recouvre le déjoint entre deux spires consécutives. Le fil de forme peut être plat ou présenter la forme d'un T inversé, la branche verticale du T se logeant dans le déjoint. Le fil de forme peut être également une bande tissée antifluage telle que décrite dans FR 2 744 511. Ces moyens pour réduire le fluage d'une gaine peuvent être prévus au-dessus du profilé lorsqu'il est agrafé par le bas et lorsqu'une gaine polymérique est disposée au-dessus du profilé. Notons que le jonc peut également être disposé dans les renflements supérieurs.

Un autre avantage réside dans le fait que l'agrafage s'effectuant dans le caisson, on optimise ainsi le rapport inertie/pas du profilé tout en éliminant les zones à faible inertie.

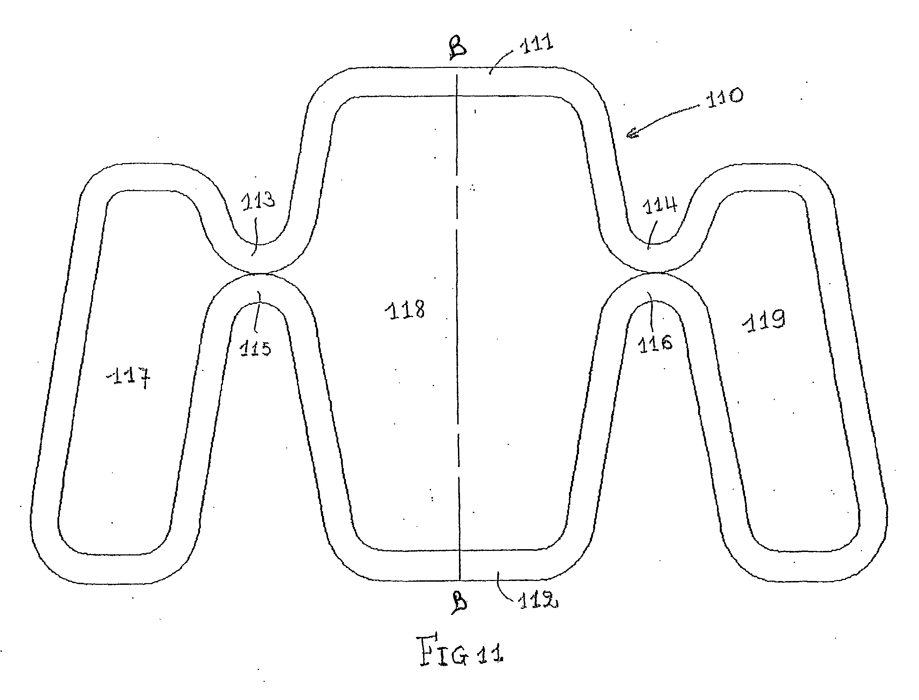

Le mode de réalisation de la figure 11 concerne la forme spéciale d'un tube profilé en creux 110 dont les parois supérieure 111 et inférieure 112 sont déformées à deux endroits avec respectivement des renflements 113, 114 et 115, 116, les renflements 113 et 115 étant en contact l'un avec l'autre tandis que les renflements 114 et 116 sont en contact l'un avec l'autre. Trois caissons distincts 117, 118 et 119 sont ainsi ménagés. La profondeur des renflements 113 à 116 dépend essentiellement des caractéristiques techniques qu'on souhaite obtenir.

Tous les profils représentés sur les figures 1 à 11 ne doivent pas dépasser une certaine largeur L pour que les tubes profilés creux puissent être enroulés hélicoïdalement. En effet, lors de l'enroulement, si le profil est trop large, les efforts seront trop importants et risqueraient de faire flamber les parois latérales du profil. Ce dernier doit donc avoir une largeur L maximum en fonction de l'épaisseur $\underline{e}$ du tube, d'une part, et en fonction de la hauteur H du profil, d'autre part. Les essais effectués ont montré que les résultats sont satisfaisants lorsque :

$$0,5 < \frac{L}{H} < 5 \text{ et de préférence } 1 < \frac{L}{H} < 3$$

$$L/e < 20$$

En réalisant un fil de forme à partir d'un tube profilé creux, on obtient un couple tube-agrafe qui est plus compact, ce qui optimise le rapport inertie/pas d'enroulement. En conséquence, les performances de la voûte de pression réalisée avec un des modes de réalisation décrits ci-dessus sont augmentées. Les mesures effectuées montrent que pour un profil de 20 mm de hauteur et 3 mm d'épaisseur, le rapport inertie/pas efficace est de 260 mm$^3$ alors que le même rapport pour un profil caisson en feuillard de 20 mm de hauteur et de 3 mm d'épaisseur est de 210 mm$^3$.

Pour un profil du type représenté aux figures 10 et 12, on utilise un tube métallique de 2,5 mm d'épaisseur et de 120 mm de périmètre qui est plié de manière à obtenir un profilé de 20,4 mm de hauteur et de 38 mm de largeur. Les pentes des faces latérales du profilé sont de 80° par rapport à l'horizontal. On obtient avec de telles dimensions un rapport inertie/pas de 250 mm$^3$.

Quant au rapport inertie/poids, on a déterminé qu'il était de l'ordre de 1,6 avec les profils de la présente invention, ce qui représente une augmentation de 20 % par rapport aux profils allégés connus et 60 % par rapport aux fils de forme. La présente invention atteint ainsi un double objectif, celui du coût réduit de fabrication et celui d'une augmentation du rapport inertie/poids pour une utilisation en mer profonde où il est nécessaire de résister à de fortes pressions externes.

En fonction de la destination des tubes profilés creux décrits en référence aux figures 1 à 12, il est possible de disposer à l'intérieur desdits tubes un conducteur électrique qui peut être utilisé pour éventuellement chauffer le fluide circulant dans la conduite flexible, par effet de peau ou par effet Joule, effet induction, etc...

On pourrait également disposer des joncs ou autres tubes transportant un fluide caloporteur dans les renflements supérieur et inférieur des profilés illustrés sur les figures 10 et 12.

De plus, l'agrafage peut être effectué par le dessus des spires d'enroulement ou par le dessous ou encore par le dessus et le dessous, en fonction de l'utilisation en dynamique ou en statique de la conduite flexible. Un avantage de l'agrafe par le dessus et le dessous permet de limiter le fluage des gaines plastiques interne et/ou externe. Il est également possible, lorsque cela est nécessaire, de remplir les renflements par une matière de remplissage afin de limiter le fluage desdites gaines plastiques.

Au niveau des renflements des différents profils, on cherchera à limiter le fluage en optimisant la hauteur du renflement.

La présente invention concerne également un procédé de fabrication de la conduite flexible dans laquelle au moins une des couches métalliques de renfort, comme la voûte de pression ou la carcasse métallique, est constituée par un enroulement hélicoïdal autour de l'axe longitudinal de ladite conduite flexible d'au moins un tube creux profilé agrafé présentant une des sections représentées sur les figures 1 à 11. De préférence, la section du tube creux profilé est sensiblement trapézoïdale.

Il faut également noter qu'il est possible de réaliser un enroulement simultané d'au moins deux tubes profilés, orientés en sens opposé, de manière que les parois latérales des spires adjacentes soient parallèles. Ceci permettrait d'augmenter le rapport inertie/pas.

## Revendications

1. Conduite tubulaire flexible, du type comprenant un caisson métallique spiralé en hélice autour d'un axe longitudinal (A-A) de ladite conduite flexible, **caractérisée en ce que** le caisson (3) est constitué par au moins un tube creux (3) profilé agrafé, le tube creux profilé résultant d'une opération de profilage d'un tube creux périphériquement fermé.

2. Conduite tubulaire flexible selon la revendication 1, **caractérisée en ce qu'**elle comprend deux caissons (104, 105) distincts réalisés dans un tube profilé creux, lesdits caissons étant symétriques par rapport à un axe médian (BB).

3. Conduite tubulaire flexible selon la revendication 2, **caractérisée en ce que** les caissons sont obtenus par déformation du tube profilé creux et de telle sorte qu'après déformation les parois supérieure (120) et inférieure (121) du tube profilé creux déformé sont amenées en appui l'une sur l'autre dans une zone de contact (122).

4. Conduite tubulaire flexible selon la revendication 2 ou 3, **caractérisée en ce que** les parois latérales externes (123,124) de chaque caisson font avec l'horizontale (C) un angle compris entre 60 et 90°.

5. Conduite tubulaire flexible selon la revendication 3, **caractérisée en ce que** la zone de contact (122) est située sur la fibre neutre (7) du tube profilé creux.

6. Conduite tubulaire flexible selon les revendications 2 à 5, **caractérisée en ce que** le tube profilé creux présente une section sensiblement trapézoïdale après déformation.

7. Conduite flexible selon la revendication 1, **caractérisée en ce qu'**elle comporte une voûte de pression constituée par un enroulement hélicoïdal à pas court du tube profilé creux autour de l'axe longitudinal de la conduite flexible.

8. Conduite flexible selon la revendication 1, **caractérisée en ce qu'**elle comporte une carcasse interne constituée par un enroulement hélicoïdal à pas court du tube profilé creux autour de l'axe longitudinal de la conduite flexible.

9.  Conduite flexible selon l'une des revendications 7 à 8, **caractérisée en ce que** la section comprend sur au moins une des faces supérieure et/ou inférieure (63, 101, 102) au moins un renflement (5, 64) dirigé vers l'une des faces opposées, ledit renflement pouvant servir de logement à une agrafe (12, 12', 65) destinée à l'agrafage de deux spires consécutives de l'enroulement hélicoïdal.

10. Conduite flexible selon la revendication 1, **caractérisée en ce que** les tubes profilés creux sont agrafés par leur face supérieure.

11. Conduite flexible selon la revendication 1, **caractérisée en ce que** les tubes profilés creux sont agrafés par leur face inférieure.

12. Conduite flexible selon la revendication 1, **caractérisée en ce que** les tubes profilés sont agrafés par leurs faces supérieure et inférieure.

13. Conduite flexible selon l'une des revendications précédentes, **caractérisée en ce qu'**un conducteur électrique est disposé dans au moins un tube profilé creux.

14. Procédé de fabrication d'une conduite flexible, **caractérisé en ce qu'**au moins une des couches métalliques de renfort est constituée par un enroulement hélicoïdal autour de l'axe longitudinal de ladite conduite d'au moins un tube creux profilé agrafée, le tube creux profilé résultant d'une opération de profilage d'un tube creux périphériquement fermé.

15. Procédé de fabrication d'une conduite flexible, **caractérisé en ce que** ledit tube creux profilé agrafé présente une section sensiblement trapézoïdale.


**Patentansprüche**

1.  Flexible, röhrenförmige Leitung der Art, umfassend einen metallischen Behälter bzw. eine Kassette, der bzw. die schrauben- bzw. helixförmig um eine Längsachse (A-A) der flexiblen Leitung spiralig gewickelt ist, **dadurch gekennzeichnet, daß** der Behälter (3) aus wenigstens einem profilierten, verklammerten bzw. eingehakten, hohlen Rohr (3) gebildet ist, wobei das profilierte, hohle Rohr aus einer Profilierungsbearbeitung eines in Umfangsrichtung geschlossenen hohlen Rohrs resultiert.

2.  Flexible, röhrenförmige Leitung nach Anspruch 1, **dadurch gekennzeichnet, daß** es zwei gesonderte Behälter (104, 105) umfaßt, die in einem profilierten, hohlen Rohr realisiert bzw. ausgebildet sind, wobei die Behälter in bezug auf eine Mittelachse (BB) symmetrisch sind.

3.  Flexible, röhrenförmige Leitung nach Anspruch 2, **dadurch gekennzeichnet, daß** die Behälter durch Deformation bzw. Verformung des profilierten, hohlen Rohrs erhalten sind, und derart, daß nach einer Deformation die obere (120) und untere (121) Wand des deformierten, hohlen, profilierten Rohrs in Anschlag aneinander in einer Kontaktzone (122) gebracht sind.

4.  Flexible, röhrenförmige Leitung nach Anspruch 2 oder 3, **dadurch gekennzeichnet, daß** die seitlichen Außenwände (123, 124) von jedem Behälter mit der Horizontalen (C) einen Winkel zwischen 60 und 90° einschließen.

5.  Flexible, röhrenförmige Leitung nach Anspruch 3, **dadurch gekennzeichnet, daß** die Kontaktzone (122) auf der neutralen Faser bzw. Leiter(7) des hohlen, profilierten Rohrs angeordnet ist.

6.  Flexible, röhrenförmige Leitung nach einem der Ansprüche 2 bis 5, **dadurch gekennzeichnet, daß** das hohle, profilierte Rohr einen im wesentlichen trapezförmigen Schnitt nach der Deformation aufweist.

7.  Flexible, röhrenförmige Leitung nach Anspruch 1, **dadurch gekennzeichnet, daß** es ein Druckgewölbe bzw. -bogen umfaßt, welches durch ein schrauben- bzw. helixförmiges Einrollen mit kurzer Ganghöhe bzw. Schritt des hohlen, profilierten Rohrs um die Längsachse der flexiblen Leitung ausgebildet ist.

8.  Flexible, röhrenförmige Leitung nach Anspruch 1, **dadurch gekennzeichnet, daß** es eine innere Karkasse umfaßt, die durch ein schrauben- bzw. helixförmiges Einrollen mit kurzer Ganghöhe bzw. Schritt des hohlen, profilierten Rohrs um die Längsachse der flexiblen Leitung ausgebildet ist.

9.  Flexible, röhrenförmige Leitung nach einem der Ansprüche 7 bis 8, **dadurch gekennzeichnet, daß** der Querschnitt auf wenigstens einer der oberen und/oder unteren Seite (63, 101, 102) wenigstens eine Verdickung bzw. Verstärkung bzw. Wulst (5, 64) aufweist, die zu einer der gegenüberliegenden bzw. entgegengesetzten Seiten gerichtet ist, wobei die Verdickung für eine Lagerung bzw. Anordnung einer Klammer (12, 12', 65) dienen kann, die dazu bestimmt ist, zwei aufeinanderfolgende Windungen bzw. Schraubengänge der helixförmigen Einrollung zu verklemmen bzw. zu verklammern.

10. Flexible, röhrenförmige Leitung nach Anspruch 1, **dadurch gekennzeichnet, daß** die hohlen profilierten Rohre durch ihre obere Seite bzw. Fläche zusammengeklammert sind.

11. Flexible, röhrenförmige Leitung nach Anspruch 1, **dadurch gekennzeichnet, daß** die hohlen profilierten Rohre durch ihre untere Seite zusammengeklammert sind.

12. Flexible, röhrenförmige Leitung nach Anspruch 1, **dadurch gekennzeichnet, daß** die profilierten Rohre durch ihre obere und untere Seite zusammengeklammert sind.

13. Flexible, röhrenförmige Leitung nach einem der vorhergehenden Ansprüche, **dadurch gekennzeichnet, daß** ein elektrischer Leiter in wenigstens einem hohlen, profilierten Rohr angeordnet ist.

14. Verfahren zur Herstellung einer flexiblen Leitung, **dadurch gekennzeichnet, daß** wenigstens eine der metallischen Verstärkungsschichten aus einer schrauben- bzw. helixförmigen Einrollung um die Längsachse der Leitung an wenigstens einem profilierten zusammengeklammerten hohlen Rohr ausgebildet wird, wobei das profilierte, hohle Rohr aus einer Profilierungsbearbeitung eines in Umfangsrichtung geschlossenen, hohlen Rohrs resultiert.

15. Verfahren zu Herstellung einer flexiblen Leitung, **dadurch gekennzeichnet, daß** das hohle, profilierte, zusammengeklammerte Rohr einen im wesentlichen trapezförmigen Querschnitt aufweist.

**Claims**

1. A flexible tubular pipe, of the type comprising one metal box section spiraled in a helix about a longitudinal axis (A-A) of said flexible pipe, **characterized in that** the box section (3) consists of at least one interlocked hollow profiled tube (3), the hollow profiled tube resulting from the profiling of a hollow tube peripherically closed.

2. The flexible tubular pipe as claimed in claim 1, **characterized in that** it has two separate box sections (104, 105), made in a hollow profiled tube, said box sections being symmetrical with respect to a mid-axis (BB).

3. The flexible tubular pipe as claimed in claim 2, **characterized in that** the box sections are obtained by deformation of the hollow profiled tube and in such a way that, after deformation, the upper walls (120) and lower walls (121) of the deformed hollow profiled tube are brought to bear against one another in a contact region (122).

4. The flexible tubular pipe as claimed in claim 2 or 3, **characterized in that** the external side walls (123, 124) of each box section make an angle of between 60 and 90° with the horizontal (C).

5. The flexible tubular pipe as claimed in claim 3, **characterized in that** the contact region (122) is located on the neutral fiber (7) of the hollow profiled tube.

6. The flexible tubular pipe as claimed in claims 2 to 5, **characterized in that** the hollow profiled tube has an approximately trapezoidal cross-section after deformation.

7. The flexible pipe as claimed in claim 1, **characterized in that** it includes a pressure vault formed by a helical winding with a short pitch of the hollow profiled tube about the longitudinal axis of the flexible pipe.

8. The flexible pipe as claimed in claim 1, **characterized in that** it includes an internal carcass formed by a helical winding with a short pitch of the hollow profiled tube about the longitudinal axis of the flexible pipe.

9. The flexible pipe as claimed in either of claims 7 and 8, **characterized in that** the cross-section comprises, on at least one of the upper and/or lower faces (63, 101, 102), at least one bulge (5, 64) directed toward one of the opposed faces, it being possible for said bulge to act as a housing for a fastener (12, 12', 65) intended for interlocking two consecutive turns of the helical winding.

10. The flexible pipe as claimed in claim 1, **characterized in that** the hollow profiled tubes are interlocked via their upper face.

11. The flexible pipe as claimed in claim 1, **characterized in that** the hollow profiled tubes are interlocked via their lower face.

12. The flexible pipe as claimed in claim 1, **characterized in that** the hollow profiled tubes are interlocked via their upper and lower faces.

13. The flexible pipe as claimed in one of the preceding claims, **characterized in that** an electrical conductor is placed in at least one hollow profiled tube.

14. A process for manufacturing a flexible pipe, **characterized in that** at least one of the metal reinforcing layers is formed by a helical winding of at least one interlocked hollow profiled tube about the longitudinal axis of said pipe, the hollow profiled tube resulting from the profiling of a hollow tube peripherically closed.

**15.** A process for manufacturing a flexible pipe, **characterized in that** said interlocked hollow profiled tube has an approximately trapezoidal cross-section.

FIG 1

EP 1 340 013 B1

Fig 2

FIG 3

FIG 4

Fig 5

FIG 6

FIG 7

EP 1 340 013 B1

FIG 8

FIG 9

EP 1 340 013 B1

FIG 10

EP 1 340 013 B1

FIG 11

EP 1 340 013 B1

FIG 12